# EUROPEAN PATENT APPLICATION

(11) **EP 1 022 608 A1**
(43) Date of publication of application: **26.07.2000**
(21) Application number: 99300425.8
(22) Date of filing: 21.01.1999
(51) Int. Cl.: G03B 27/32, G03B 27/53, G03B 17/06, H04N 1/00, H04N 7/14

(54) **Camera with projection viewfinder**

(71) Applicant: Hewlett-Packard Company, Palo Alto, California 94304 (US)
(72) Inventor: Hall, Glenn Peter, Stroud, Gloucestershire GL6 7LT (GB); Roe, Malcolm David, Clevedon BS21 7QS (GB); Kahn, Richard Oliver, Almondsbury BS32 4DE (GB)
(74) Representative: Lawrence, Richard Anthony

(57) **Abstract**

The present invention relates to a camera (1) that projects a pattern of visible light (28) onto an object (10) to be photographed to indicate to a photographer the area of the object within view of the camera. The camera (1) comprises image capture means (18), such as photographic film or a CCD array, a lens (2) arranged to image the object (10) lying in an object plane (12) onto the image capture means (18). A source (20) of visible optical radiation, such as a light emitting diode or laser diode, is projected onto the object plane (12) to indicate to a user of the camera the bounds of the object (10) imaged onto the image capture means (18). In one embodiment the optical source (20) is inside the camera body (8) and projected through the lens (2). In an alternative embodiment, the source is external to the camera body and projected directly onto the object plane.

## Description

The present invention relates to a camera that projects a pattern of visible light onto an object to be photographed to indicate to a photographer the area of the object within view of the camera. The invention is applicable to both handheld and mounted cameras. A particularly relevant application is for use of a camera (especially a desk-mounted camera) to provide the function of a document scanner.

In recent years, document scanners have become commonplace. Although these work well and are relatively inexpensive, a document scanner occupies a significant amount of scarce desk space.

The use of a camera to take a photograph of a document consisting of text and/or images offers one way of dealing with the problem of wasted desk space. In conventional film or electronic photography, a person may look through a viewfinder to aim the camera at an object. When the object is a document, for example a document lying on a desk, this means a person has to stand up, lean over the document, look through the viewfinder and then take the photograph. This is not very convenient. Furthermore, if the document is at the back of a desk, the person may have to move the document. In addition, the person's body may block ambient light, thereby requiring the use of a flash. The use of a flash in an office environment may be unacceptable.

Recently, some digital cameras have been provided with a liquid crystal display (LCD) viewfinder that may be viewed at some distance and that can be oriented by a user so that the LCD viewfinder may be viewed over a range of angles, for example at right angles to the optical axis of the camera. By pointing the lens downward while keeping the viewfinder at a convenient angle, it would then be possible to take a picture of a document on a desktop from a sitting position. Unfortunately, it is not intuitively obvious to most people which way a hand-held camera should be moved by looking at the LCD viewfinder.

One known way of avoiding the need to aim the camera through the viewfinder is to provide the camera with mounting points for four legs that rest on the desk surface just outside the area in view of the camera lens. However, it takes time to assemble and disassemble legs to the camera, and if such legs are left in place the camera becomes bulky to store.

Alternatively, if the camera is fixed to the desktop, the viewed area can be marked on the desktop as a rough guide to where one should place the document. However, the document obscures the markings so they cannot be used for fine positioning.

Examples of systems designed for digital capture of documents from a physical desktop by cameras mounted in some manner on or above the desktop are provided in European Patent Application Publications EP 0838751 A2 and EP 0840200 A2.

It is an object of the present invention to provide a camera that is more convenient to use when taking a photograph, for example a photograph of a document lying on a desk.

According to the invention, there is provided a camera comprising image capture means, a lens arranged to image an object in an object plane onto the image capture means, characterised in that the camera has a source of visible optical radiation, and means by which the visible optical radiation may be projected onto the object plane to indicate to a user of the camera the bounds of the object imaged onto the image capture means.

The term "lens" as used herein is not restricted to a single lens element and includes lenses with compound optical elements.

The image capture means may be photographic film, or an electronic device, for example a detector array, in particular a two-dimensional CCD array or CMOS array.

The source of visible optical radiation is preferably a compact solid state device or devices, for example one or more light emitting diodes or laser diodes. There may be several such devices, for example, four devices each providing light projected onto one of the four corners of the object plane. Alternatively, fewer devices may be used with the light being split into discrete sources, for example by appropriate light guides, or swept dynamically by a galvanometer.

Since cameras generally have a useful depth of focus, the image need not lie exactly in focus. For example, when taking a picture from a seated position of a document lying on a desktop, the document will generally be at an angle to the exact object plane. However, as long as the document depth of focus of the camera, it may still be imaged accurately. Therefore, the term "object plane" as used herein is not limited to the exact object plane, but includes other object planes within the depth of focus of the camera.

A user may therefore use the camera, without the need to peer through any viewfinder, to point roughly in the direction of the object, for example a document lying on a desk top, and then move the camera until the projected visible optical radiation indicates the bounds of the camera's view, whereupon the picture may be taken.

If the camera is not hand-held, but mounted, for example on a bracket attached to a desk top or other item of office furniture, then the document may be moved until it falls within the bounds indicated by the projected optical radiation.

In general, at least two points, lines or areas of optical radiation may need to be projected onto the object plane, for example at opposite corners of a rectangular field of view for the camera. Preferably, there is a pattern of projected optical radiation that indicates all four corners of a camera's field of view. Such a pattern may then bracket or delineate the bounds of the object to be imaged onto the image capture means. A particularly clear pattern to use is a box - if a box is desired to delineate the boundaries, these lines may be projected by either optical means or by dynamically sweeping (by, for example, a galvanometer) an illuminating spot along the figure to be drawn.

In one embodiment of the invention, the source of optical radiation is projected onto the object plane independently of the lens. The source may therefore have optical elements to collimate or focus the optical radiation. If the source is a laser diode, then these elements may be included with the packaging of the laser diode device. The beams of optical radiation from the sources are angled to correspond at least approximately with the periphery of the angle of view of the camera. More precise adjustment of the relative positions of the boundary markers and the camera can be performed as the document is collected.

In an alternative embodiment of the invention, the lens itself projects the optical radiation onto the object plane. The sources of optical radiation may therefore be provided within the protective confines of a camera body.

The camera may have a viewfinder and a mirror that reflects light between the lens and viewfinder. Optical radiation is then directed to the lens via a reflection from the mirror. If the camera is of the single lens reflex type, then the mirror may be movable. This arrangement is particularly suitable in the case that the image capture means is photographic film, because then it is possible to design the camera to keep stray light from the sources from reaching and exposing the film. Alternatively, the mirror may be fixed and partially reflective and transmissive.

In certain embodiments, the camera can capture an image while the boundary marker illuminant is turned on. This is appropriate if means are provided to prevent light from the sources from reaching the detector, or if light from the sources can be screened out by some other means, for example in later image processing.

For applications such as imaging of a document on a desk top, it is preferable if the image capture means is an electronic detector array. In this case, the source of optical radiation may be provided within the camera in an image plane of the lens. Stray light from the sources may still, of course, affect such a detector array, in which case the sources or sources of optical radiation may be switched off just before the detector array, and any associated electronics, are activated to capture the image. Because the image capture time of such an array is quite fast, of the order to 50 ms or less, a momentary disappearance of the visible optical radiation may scarcely be noticed by the user of the camera. Therefore, no optical radiation may be projected when the image capture means captures an image.

If the camera is designed such that no optical radiation passes directly from the radiation source to the image detector array, for example by using a partially transmissive mirror, the optical radiation source may be left on while the detector acquires the image. This mode allows the camera to determine the exact position of the boundary markers as the user perceives it. This may be useful if the projected markers are movable or not well-aligned with the object area viewed by the detector array.

In order to keep the pattern of projected optical radiation well defined across a range of camera operating distances, it is advantageous if the camera has means for focussing in conjunction both an image of the object on the image capture means and the optical radiation projected onto the object plane. In the case of a source of optical radiation inside the camera that passes through the lens, this may be done by focussing the lens or moving the image capture means and the optical source or sources to lie on an in-focus image plane. The optical radiation projected onto the object may therefore be kept in focus automatically as the camera focuses on the object.

Also according to the invention, there is provided a method of using a camera to capture an image of an object, the camera comprising a source of visible optical radiation and means by which the visible optical radiation may be projected onto the object plane, characterised in that the method comprises the steps of:
i) pointing the camera generally at the object;
ii) moving the camera until the projected optical radiation indicates that the object is imaged by the camera; and
iii) using the camera to capture an image of the object.

Alternatively, if the camera is mounted to a desktop, an alternate method would consist of the following steps:
i) moving the object into a region viewable by the camera;
ii) adjusting the camera until the visible optical radiation projected onto the object plane corresponds to a specified capture area of the object; and
iii) using the camera to capture an image of the specified capture area of the object.

The invention will now be further described, by way of example, with reference to the accompanying drawings, in which:
Figure 1 is a schematic drawing of a first embodiment of a camera according to the invention, with two or more sources of visible optical radiation near the edges of an electronic image detector array projected onto an object plane via the camera's lens;
Figure 2 is a schematic drawing of a second embodiment of a camera according to the invention, similar to that of Figure 1 but with a reflex mirror that reflects light from the optical sources to the lens;
Figure 3 is a schematic drawing of a third embodiment of a camera according to the invention, similar to that of Figure 1 but with two or more fixed sources of optical radiation provided externally to the camera and lens;
Figure 4 is a perspective view of a camera according to the invention being used to image a document lying on a desktop; and
Figure 5 is a schematic drawing of a fourth embodiment of a camera according to the invention, similar to that of Figure 3 but such that the external sources of optical radiation are dynamically movable.

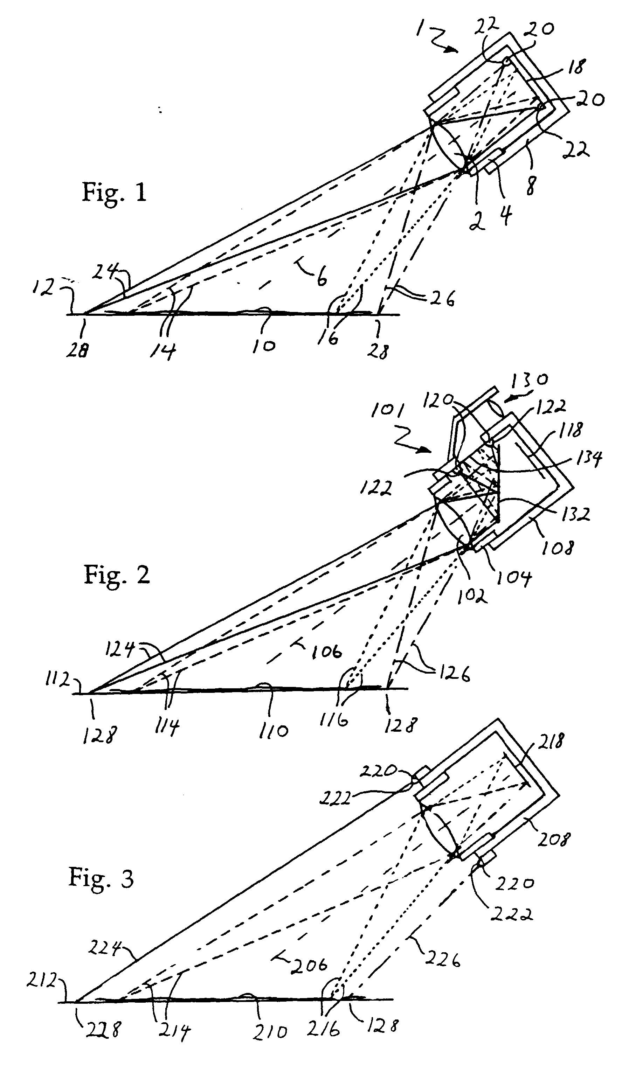

Referring first to Figure 1, a digital camera 1 has a compound lens 2 held in a lens body 4. The camera 1 may be focussed by sliding the lens 2 along the optical axis 6 of the lens 2 with respect to a camera body 8. Not shown are other well-known components of digital cameras, such as an exposure diaphragm, battery, shutter, exposure button, control electronics, memory or removable data storage medium, etc.

The lens is directed downwards at an oblique angle towards a document 10 lying on a desktop 12. Although parts of the document 10 lie at different distances from the lens 2, in this example all parts of the document lie within the depth of focus defined by the lens and exposure diaphragm setting. The document 10 can therefore be said to lie in an object plane of the lens.

Rays 14,16 from opposite portions of the document 10 are captured by the lens 2 and brought to focus in an image plane coincident with image capture means in the form of a two dimensional CCD detector array 18 within the camera body 8. The detector array 18 may be any convenient shape but will generally be either square or rectangular.

Focus may be determined in many ways but one appropriate autofocus method is to servo the focus until the detector array acquires images with the greatest possible high frequency content. This indicates that the camera is optimally focused on the object plane. There are alternative possibilities - for example, if there is no image content on which to focus (e.g. a text document), but the boundary markers consist of vectors instead of points and the detector array can capture images while the boundary markers are illuminated, the autofocus mechanism may optimise the frequency content of the boundary markers themselves. If the projected optical radiation means are separate from the detector array lens, focus may also be determined by triangulating the position of the boundary markers as viewed by the detector.

Four visible light emitting diodes (LEDs) 20, two of which may be seen in the drawing, are positioned within the camera body 8 at four points proximate but just outside the bounds of the detector array 18. The light from each LED 20 is not collimated, but is directed and concentrated by a lens element 22 associated with each LED generally towards the camera lens 2. Because the LEDs 20 lie in the image plane of the lens 2, the lens then focuses the light 24,26 from each LED 20 to four points 28 proximate but outside a square or rectangular field of view defined by the lens 2 and the CCD array 18. The arrangement is such that the lens 2 focuses in conjunction both an image of the document 10 on the image capture means 18 and the rays 24,26 projected onto the desktop 12. The rays 24,26 are therefore automatically kept in focus at the object plane 12 as the camera focuses an image of the object on the detector 18.

A person may therefore pick up the camera 1, aim the camera obliquely downwards in the general direction towards the document 10 on the desktop, then observe the locations of the points 28 that indicate the camera's field of view. If the camera 1 is not pointed correctly, the person may then move the camera 1 and/or the document 10 until the points 28 bracket the document 10 so that all portions of interest of the document fall within the field of view. If the size of the document or area of interest within a document is either too large or too small to be framed by moving the camera farther away from or closer to the document, the focal length of the lens may be adjusted to more reasonably match the size of the area of interest to the area of the detector array. The user can then press an exposure button to capture an image of the document 10.

It is noted that the use of projected "marker" points to indicate a part of an object available for capture by a bar code reader is taught in US Patent 4,877,949. This prior art consequently relates only to ensuring that a line (a bar code) is captured, rather than to selective capture of a 2-dimensional image as in the present invention.

Figures 2 and 3 show alternative embodiments 101,201 of the invention, in which similar features are numbered similarly but incremented by 100 or 200.

The camera 101 of Figure 2 is a single lens reflex type camera, with a movable mirror 132 set at 45° to the lens optical axis 106. The mirror 132 reflects and focuses rays from the document 110 onto a ground glass screen 134 affixed within the camera body 108. An image of the document may then, in principle, be viewed by a user of the camera 101 through a viewfinder 130.

However, when pointing the camera 101 downwards towards a document on the desk, from a seated position at a height low enough for the viewfinder to be used, the angle of the optical axis 106 to the plane of the desk 112 may become so shallow that not all portions of the document 100 remain in focus. Another difficulty is that keystone distortion of the document may become too great, causing loss of resolution in the portions of the document furthest from the lens 102. Therefore, the user may need to angle the camera 101 closer towards vertical. In order to obtain the best image of the document, the user may wish to hold the camera close to vertical, for example within ±10° of vertical. The projected pattern of optical radiation is then particularly useful in aligning the camera with a document, as the camera in this orientation may be held well away from a person's body directed downwards towards the document.

The camera 101 therefore has four LEDs 120 provided proximate but just outside the bounds of the ground glass screen 134. Each LED is packaged with a lens element 122 that concentrates visible light towards the lens 102 via the mirror 132. Because each LED 120 lies in an image plane of the lens 102, four points 128 of visible light are projected and focused onto the object plane defined by the desktop 112. The camera 101 may then be aimed as described above prior to taking a picture or capturing an image of the document 110. The focal length of the lens may be adjusted as in the previous example.

Because the LEDs 120 are optically isolated from the image capture means 118, these means may be either photographic film or an electronic detector array. When a photograph is taken, the mirror 132 flips up out of the way of rays 114,116 captured by the lens 102. Optionally, the LED's may be switched off while the mirror is moved from its rest position.

In an alternative embodiment the mirror 132 may be half-silvered and fixed in place. About half of the light from the LEDs 120 would therefore be projected from the camera lens, and about half the light incident on the mirror from the document 110 would reach the detector 118.

Figure 3 shows a third embodiment of the camera 201, in which four laser diodes 220 are mounted externally on the body 208 of the camera 201. Each laser diode is in a package with optical elements 222 to produce a highly collimated beam of visible light 224,226 that is projected directly onto the image plane defined by the desktop 212. Each laser diode is angled so that the beams 224,226 diverge with respect to the lens optical axis 206 so that the spots 228 remain just outside the camera field of view.

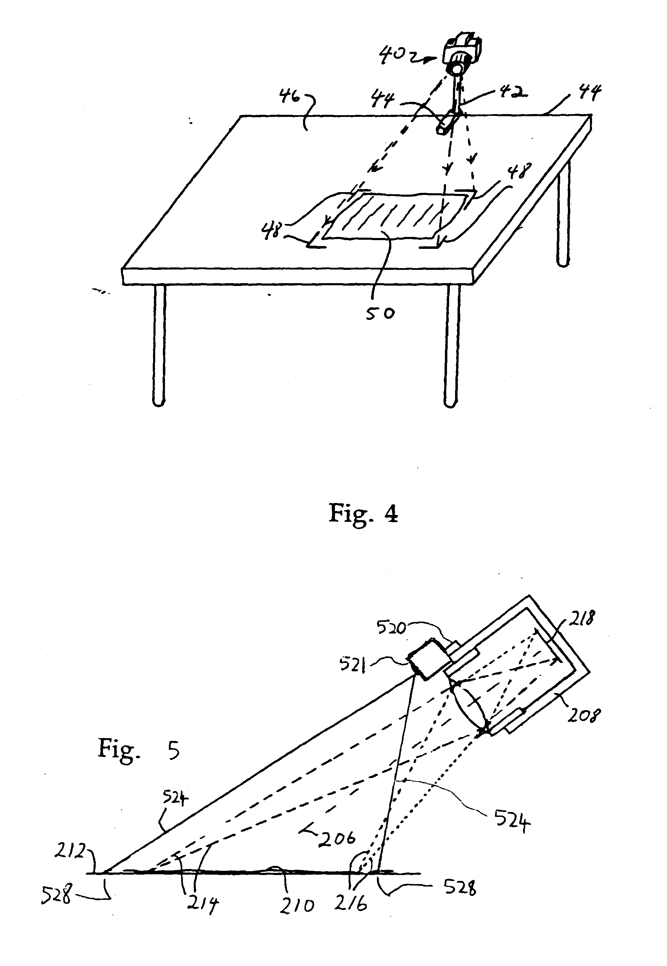

Figure 4 illustrates one way in a camera 40 according to the invention may be used. The camera 40 is mounted atop a telescopic pole 42 affixed with a bracket 42 to an edge 44 of a desktop surface 46. The camera differs from the embodiments described above, in that instead of producing four projected spots defining the edges of the camera field of view, the camera has a visible optical source that projects a pattern in the form of four similar L-shaped areas 48 that bracket the field of view. Such a pattern may result, for example, from an LED or laser diode having an emitting area with the same L-shape. A document 50 may therefore be positioned by hand on a desk in the field of view indicated by the four L-shaped areas 48. An advantage of this approach is that the camera 40 may be mounted semi-permanently in a convenient location, for example above a back edge of a desk against a wall. There is therefore no need to store the camera 40 when not in use.

Figure 5 illustrates a variation of Figure 3 but where a single laser diode 520 projects vector drawings onto the document by use of a laser galvanometer 521 similar to those used in a laser light show. Boundary markers 528 are drawn by sweeping the optical radiation 524 along the delineating figure, such as a rectangle. The sweeping motion is cyclical and occurs at a frequency high enough such that the figure is perceived by the user as continuously illuminated. The positions of the boundary markers may be adjusted to conform to the detector array limits by adjusting the path swept out by the galvanometer until the detector array "sees" the corners of the boundary markers in the corners of its field of view. In this way, the precision and hence cost of the galvanometer may be kept low while the boundary markers remain an accurate representation of the area to be captured.

The embodiments described above will generally be used in brightly lit surroundings. In order to be useful in bright light conditions, each laser diode optical source may need to have an optical output power of about 1 mW. LEDs are less directional, and may need to be of the order of 100 mW for to provide a similarly bright spot or pattern. It is therefore important to conserve battery power, particularly with LEDs.

To achieve this, it is desirable for the light sources to be left switched off until needed. For example, the camera may have an on/off switch that activates a display showing frame count, exposure or other information. The light sources may remain off, however, until an exposure button is partially depressed, whereupon the light sources come on. The camera may also perform autofocus and auto-exposure functions at the same time.

Although the light sources may need to be switched off during the exposure, the sources may then be switched back on after the exposure has been taken, at least momentarily, in order to help provide confirmation that the camera field of view was correctly oriented.

Since both LEDs and lasers produce monochromatic optical radiation, the detector array may be adapted to filter out the light from the light sources (perhaps by use of an appropriate notch filter), allowing the light sources to be left on throughout image capture.

The camera described above may be used in applications other than desktop document imaging, and indeed may be useful in general photography with an otherwise conventional handheld camera. For example, many people find it difficult to use a viewfinder. As long as there is a background to the scene within range of the spots or pattern projected by the light sources such that the user can see the projected light incident on the background, then the user can point and aim the camera without the need to peer through the viewfinder. If the camera is handheld, any camera shake will of course be visible in the projected light. However, this provides useful information to the user of the camera, and may encourage the user to adopt a more stable stance whilst holding the camera and pressing an exposure button.

## Claims

1. A camera (1,101,102) comprising image capture means (18,118,218), a lens (2,102,202) arranged to image an object (10,110,210) in an object plane (12,112,212) onto the image capture means (18,118,218), characterised in that the camera has a source (20,120,220) of visible optical radiation, and means by which the visible optical radiation (24,26;124,126; 224,226) may be projected onto the object plane (12,112,212) to indicate to a user of the camera the bounds of the object (10,110,210) imaged onto the image capture means (18,118).

2. A camera (201) as claimed in Claim 1, in which the source (220) of optical radiation is projected onto the object plane (212) independently of the lens (202).

3. A camera (1,101) as claimed in Claim 1, in which the lens (2,102) projects the optical radiation (24,26; 124,126) onto the object plane (12,112,212).

4. A camera (101) as claimed in Claim 3, in which the camera (101) has a viewfinder (130) and a mirror (132) that reflects light between the lens (102) and viewfinder (130), wherein the optical radiation (124,126) is directed to the lens (102) via a reflection from the mirror (132).

5. A camera (101) as claimed in Claim 4, in which the camera (101) is a single lens reflex camera with a movable mirror (132).

6. A camera (101 as claimed in Claim 4, in which the mirror (132) is fixed and partially reflective and transmissive.

7. A camera (1,101,201) as claimed in any one of Claims 3 to 6 in which the source (20,120,220) of optical radiation (20,120,220) is in an image plane of the lens (2,102,202).

8. A camera (1,101,201) as claimed in any preceding claim, in which the image capture means includes a detector array (18,118,218).

9. A camera (1,101,201) as claimed in Claim 7 or Claim 8 in which no optical radiation (24,26;124,126;224,226) is projected when the image capture means (18,118,218) captures an image.

10. A camera (1,101,201) as claimed in any of claims 1 to 8 in which optical radiation (24,26;124,126;224,226) is projected when the image capture means (18,118,218) captures an image, and wherein means are provided either to prevent said optical radiation from reaching the image capture means (18,118) or to adjust a captured image to remove substantially any signal resulting from the optical radiation.

11. A camera (1,101,201) as claimed in any preceding claim, in which the camera (1,101,201) has means for focussing (2,4;102,104;202,204) in conjunction both an image of the object (10,110,210) on the image capture means (18,118,218) and the optical radiation (24,26;124,126;224,226) projected onto the object plane (12,112,212).

12. A camera (1,101) as claimed in any preceding claim, in which the source of optical radiation includes one or more visible light emitting diodes (20,120).

13. A camera (201) as claimed in any preceding claim, in which the source of optical radiation includes one or more laser diodes (220).

14. A camera (201) as claimed in Claim 12, in which a laser diode (220) is mounted externally of the camera to project a beam of optical radiation (224,226) at an angle diverging from an optical axis (206) of the lens (202)

15. A camera (1,101,201) as claimed in any preceding claim, in which the optical radiation (24,26;124,126;224,226) projected onto the object plane (12,112,212) delineates the bounds of the object (10,110,210) imaged onto the image capture means (18,118,218) by tracing on the object plane the perimeter of the bounds of capture of the image capture means (18,118,218).

16. A camera (201) as claimed in claim 15, wherein the source of optical radiation comprises a laser diode (520) and a galvanometer (521) adapted such that the optical radiation traces on the object plane the perimeter of the bounds of capture of the image capture means (218).

17. A method of using a camera (1,101,201) to capture an image of an object (10,110,210), the camera (1,101,201) comprising a source (20,120,220) of visible optical radiation and means by which the visible optical radiation (24,26;124,126;224,226) may be projected onto the object plane (12,112,212), characterised in that the method comprises the steps of:
i) pointing the camera (1,101,201) generally at the object (10,110,210);
ii) moving the camera (1,101,201) until the projected optical radiation (24,26;124,126;224,226) indicates that the object (10,110,210) is imaged by the camera (1,101,201); and
iii) using the camera (1,101,201) to capture an image of the object (10,110,210).

18. A method of using a camera (1,101,201) to capture an image of an object (10,110,210), the camera (1,101,201) comprising a source (20,120,220) of visible optical radiation and means by which the visible optical radiation (24,26;124,126;224,226) may be projected onto the object plane (12,112,212), the camera (1,101,201) being mounted relative to an object plane, characterised in that the method comprises the steps of:
i) moving the object into a region viewable by the camera;
ii) adjusting the camera until the visible optical radiation projected onto the object plane corresponds to a specified capture area of the object; and
iii) using the camera to capture an image of the specified capture area of the object.
